(19) **Europäisches Patentamt**

**European Patent Office**

**Office européen des brevets**

(11) **EP 1 090 211 B1**

(12) **FASCICULE DE BREVET EUROPEEN**

(45) Date de publication et mention de la délivrance du brevet:
**07.04.2004 Bulletin 2004/15**

(51) Int Cl.⁷: **F01N 3/02**, C10L 10/06

(21) Numéro de dépôt: **99925063.2**

(86) Numéro de dépôt international:
**PCT/FR1999/001378**

(22) Date de dépôt: **10.06.1999**

(87) Numéro de publication internationale:
**WO 1999/067509 (29.12.1999 Gazette 1999/52)**

(54) **PROCEDE DE TRAITEMENT PAR COMBUSTION DES PARTICULES CARBONEES DANS UN CIRCUIT D'ECHAPPEMENT D'UN MOTEUR A COMBUSTION INTERNE**

VERFAHREN ZUR BEHANDLUNG DURCH VERBRENNUNG VON KARBONHALTIGEN TEILCHEN IN DER ABGASANLAGE EINER BRENNKRAFTMASCHINE

METHOD FOR TREATING BY COMBUSTION CARBON-CONTAINING PARTICLES IN AN INTERNAL COMBUSTION ENGINE EXHAUST CIRCUIT

(84) Etats contractants désignés:
**DE FR GB IT**

(30) Priorité: **22.06.1998 FR 9807859**

(43) Date de publication de la demande:
**11.04.2001 Bulletin 2001/15**

(73) Titulaire: **RHODIA CHIMIE**
**92408 Courbevoie Cédex (FR)**

(72) Inventeurs:
- **BLANCHARD, Gilbert**
  **F-60330 Lagny le Sec (FR)**
- **MUSTEL, William**
  **F-95160 Montmorency (FR)**
- **SEGUELONG, Thierry**
  **F-92800 Puteaux (FR)**

(74) Mandataire: **Dubruc, Philippe**
**Rhodia Services,**
**Direction de la Propriété Industrielle,**
**40, rue de la Haie-Coq**
**93306 Aubervilliers Cedex (FR)**

(56) Documents cités:
**EP-A- 0 341 832**      **EP-A- 0 758 713**
**EP-A- 0 835 684**      **WO-A-97/16632**
**WO-A-97/28358**      **US-A- 5 501 714**

- **PATENT ABSTRACTS OF JAPAN vol. 006, no. 098 (C-106), 8 juin 1982 (1982-06-08) & JP 57 030522 A (TSUCHIYA MFG CO LTD), 18 février 1982 (1982-02-18)**
- **PATENT ABSTRACTS OF JAPAN vol. 097, no. 007, 31 juillet 1997 (1997-07-31) & JP 09 079024 A (TOYOTA MOTOR CORP), 25 mars 1997 (1997-03-25)**

## Description

La présente invention a pour objet un procédé pour réduire les émissions nocives des moteurs à combustion interne et limiter significativement leurs rejets carbonés.

Elle concerne plus particulièrement l'utilisation conjointe d'au moins un catalyseur d'oxydation desdites particules carbonées et de dioxyde d'azote pour la combustion des matières carbonées issues de moteurs à combustion interne.

Lors de la combustion des carburants, les produits carbonés ou hydrocarbonés forment dans leurs produits de combustion, des particules carbonées également désignées dans la suite de la description sous l'expression de "suie(s)" qui sont réputées nocives tant pour l'environnement que pour la santé. Par ailleurs, ces suies se déposent sur l'ensemble des parois internes du moteur et peuvent occasionner des dysfonctionnements en particulier dans les turbocompresseurs.

En conséquence, il est recherché depuis longtemps des techniques qui permettent de réduire l'émission de ces particules carbonées. Cette recherche est par ailleurs concomitante avec la nécessité de ne pas augmenter l'émission de monoxyde de carbone et de gaz nocifs et mutagènes, tels que les oxydes d'azote.

De très nombreuses solutions ont été proposées pour réduire ces émissions carbonées.

Parmi ces solutions, la technique la plus couramment retenue consiste à adapter dans les circuits d'échappement un filtre susceptible d'arrêter la totalité ou une très forte proportion des particules carbonées engendrées par la combustion des divers combustibles. Il a ainsi été réalisé des filtres qui installés dans les circuits d'échappement permettent de réduire d'au moins 85 % en masse les émissions de suies.

Le problème à résoudre a alors été déplacé au niveau de ces filtres. En s'accumulant progressivement dans les filtres, les suies provoquent dans un premier temps, une augmentation de perte de charge et, dans un second temps, un début d'obturation qui conduit à une perte de performances du moteur à combustion interne.

Les efforts de recherche se sont alors portés sur le brûlage de suies collectées par ces filtres.

Cette opération dite de brûlage est extrêmement délicate à prévoir et à mettre en oeuvre.

On peut provoquer la combustion des suies de manière intermittente soit par un chauffage électrique soit par un brûleur ou toute autre technique utilisant une source d'énergie externe.

Une autre solution consiste à puiser la chaleur nécessaire à l'allumage de ces suies dans le moteur lui-même de manière à chauffer les suies accumulées dans le filtre et ipso facto à provoquer leur inflammation (température de l'ordre de 500-600°C).

On a également proposé d'introduire des précurseurs de catalyseur d'inflammation dans les différents carburants, de manière à abaisser la température de l'inflammation des suies.

Une autre solution vise à utiliser des catalyseurs d'oxydation à base de métaux nobles déposés sur des supports à base d'alumine ou titane. Ils permettent de faciliter à basse température, l'oxydation du monoxyde de carbone et des hydrocarbures gazeux émis par les moteurs diesel. Le rejet de monoxyde de carbone et d'hydrocarbures imbrûlés dès 300°C, est ainsi réduit de façon significative de l'ordre de 80 à 90 %. Toutefois, il est important de noter que ces catalyseurs n'ont aucune action d'oxydation de la partie carbonée des suies et présentent de plus l'inconvénient de rejeter dans l'atmosphère des quantités non négligeables d'acide nitrique qui provoquent une augmentation des pluies acides nocives pour l'homme et l'environnement. Or comme mentionné précédemment, la recherche d'une solution pour la combustion des suies est concomitante avec la nécessité de ne pas augmenter l'émission de monoxyde de carbone et celle de gaz réputés mutagènes et toxiques comme les oxydes d'azotes.

Une des solutions à ce jour les plus intéressantes consiste à ajouter directement aux carburants un additif dérivant de métaux de transition, d'alcalins d'alcalino-terreux et/ou de terres rares (EP 05 99 717). On améliore ainsi significativement la combustion de ces suies. Toutefois pour que l'oxydation de ces suies soit optimale, il demeure nécessaire que la température des gaz à traiter soit au moins de l'ordre de 300°C.

Une autre solution proposée, met à profit la composition des gaz d'échappement issus des moteurs diesels. Généralement, ces gaz comprennent en quantités significatives des oxydes d'azote (NO, $NO_2$), de l'oxygène, du monoxyde de carbone, du dioxyde de carbone, de l'eau et le cas échéant du dioxyde de soufre. C'est ainsi que le brevet EP 341 832 propose de convertir ce monoxyde d'azote en dioxyde d'azote par oxydation catalytique et d'utiliser le dioxyde d'azote ainsi généré comme agent oxydant des particules de carbone accumulées sur le filtre. Toutefois, les conditions de température dans laquelle la combustion intervient sont étroites. Elles sont limitées à une température comprise entre 250°C et 400°C. Enfin, il apparaît que la vitesse de la réaction d'oxydation des particules carbonées par le dioxyde d'azote est diminuée de manière non négligeable par le dioxyde de soufre et lorsque le rapport entre les oxydes d'azote (NO + $NO_2$) et le carbone formé par le moteur est insuffisant.

EP-A-758713 décrit un système de purification des gaz d'échappement d'un moteur diesel dans lequel on fait réagir du $NO_2$ provenant de l'oxydation du NO des gaz avec les particules de carbone du filtre. Mais cette réaction se produit entre 400°C et 500°C. WO 97/28358 décrit un procédé qui vise à abaisser la température d'inflammation de ces particules dans lequel on ajoute au carburant un catalyseur à base d'un composé organométallique.

La présente invention a plus particulièrement pour objet de proposer un nouveau procédé de traitement permettant précisément d'optimiser la combustion des particules carbonées dans une gamme de températures significativement élargie.

Plus précisément, la présente invention a pour objet un procédé de traitement par combustion des particules carbonées collectées sur un filtre placé dans un circuit d'échappement d'un moteur à combustion interne dans lequel la combustion desdites particules est effectuée par leur mise en contact avec un mélange gazeux comprenant au moins du dioxyde d'azote généré au sein du circuit d'échappement dudit moteur, caractérisé en ce que lesdites particules ont été ensemencées préalablement à leur combustion par au moins un catalyseur d'oxydation de celles-ci choisi parmi le cérium et le fer, ce ou ces éléments étant présents dans ledit catalyseur sous la forme de leur oxyde.

De manière inattendue, les inventeurs ont en effet constaté que lorsque l'oxydation des suies par du dioxyde d'azote est conduite en présence d'un catalyseur d'oxydation des suies, encore désigné ci-après sous la dénomination "COS", il est possible de réaliser leur combustion dans une gamme de températures significativement élargie.

La combustion des particules est avantageusement réalisée à une température inférieure à celle nécessaire à la combustion des particules simplement ensemencées par un catalyseur d'oxydation. Cette température de combustion par du dioxyde d'azote est également inférieure à celle nécessaire à la combustion de particules non ensemencées.

Le procédé revendiqué rend également possible la combustion des particules dans un large intervalle de température qui correspond à celui rencontré pour les gaz d'échappement moteurs Diesel. Ainsi, contrairement à d'autres procédés, le procédé de l'invention est efficace à très basse température d'échappement, c'est-à-dire à moins de 250°C et en particulier dans la gamme 200-250°C. Toutefois, il demeure également efficace à des températures dépassant 400°C.

Par particules ensemencées avec un catalyseur d'oxydation, on entend couvrir au sens de l'invention des particules carbonées dans lesquelles et/ou sur lesquelles est dispersé, sous la forme de très fines particules, le catalyseur d'oxydation des suies, COS. Dans le cadre de l'invention, les particules carbonées possèdent la particularité d'être déjà associées au catalyseur d'oxydation lorsqu'elles sont mises en présence du dioxyde d'azote.

En ce qui concerne le catalyseur d'oxydation COS, il comprend au moins un élément choisi parmi le cérium et le fer. Ces éléments y sont incorporés sous la forme de leurs oxydes. Le catalyseur peut bien entendu comprendre plusieurs éléments, chaque élément pouvant être présent, indépendamment l'un de l'autre.

Le catalyseur d'oxydation COS, ensemencé au niveau des suies est avantageusement incorporé dans celles-ci via l'introduction, d'un de ses dérivés tels qu'un sel, sol ou complexe organique dans le carburant.

Au sens de l'invention, on entend désigner par "sol" une suspension colloïdale organique à base d'au moins un des éléments précités.

Conviennent tout particulièrement à l'invention les sols organiques décrits dans les demandes EP 671 205, EP 737 236 et WO 97/19022. Pour ce qui est de la préparation de ces sols on se reportera également à l'enseignement de ces titres.

Une autre possibilité consiste à introduire le catalyseur COS sous diverses formes soit dans l'air à l'admission du moteur soit dans le circuit de recirculation des gaz d'échappement (RGE) soit à l'échappement lui-même en amont du filtre à particules.

Avantageusement, on détermine la quantité en catalyseur d'oxydation COS, à introduire dans le moteur de manière à ce que sa teneur atteigne au niveau des particules carbonées un niveau compris entre environ 0,1 % et 30 %, de préférence entre 0,1 et 15% exprimée en poids de l'élément catalytique par rapport au poids de la suie. Avantageusement cette teneur est d'au moins 0,5 % et de préférence au moins 2 %.

En ce qui concerne le dioxyde d'azote nécessaire à la combustion desdites particules carbonées, sa concentration doit être suffisante pour pouvoir promouvoir l'oxydation des particules carbonées.

Comme mentionné précédemment, les gaz d'échappement émis par les moteurs à combustion peuvent comprendre outre les particules carbonées, des hydrocarbures imbrûlés, du monoxyde d'azote, de l'oxygène, du monoxyde de carbone, du dioxyde de carbone, du dioxyde d'azote et éventuellement du dioxyde de soufre.

Naturellement, le monoxyde d'azote est présent en proportion majoritaire par rapport au dioxyde d'azote.

En conséquence la concentration en $NO_2$ à l'échappement doit être suffisante pour rendre possible l'oxydation des particules carbonées, un défaut de $NO_2$ conduisant à une oxydation partielle des suies et donc à une accumulation progressive dans le filtre.

Selon une première variante de l'invention, on peut envisager d'ajuster la concentration en dioxyde d'azote nécessaire à la combustion desdites particules carbonées par un changement de réglage du moteur opéré de façon continue ou discontinue de manière à forcer le brûlage des suies collectées sur le filtre.

Selon une seconde variante qui est à ce jour la variante préférée, la quantité en dioxyde d'azote nécessaire à la combustion des particules carbonées est générée par voie catalytique. Elle est obtenue par conversion catalytique du monoxyde d'azote.

Tout catalyseur connu pour convenir le monoxyde d'azote en dioxyde d'azote peut être mis en oeuvre dans le cadre de la présente invention. Il peut notamment être fait usage des catalyseurs déjà utilisés dans le secteur automobile pour la conversion catalytique des gaz d'échappement.

A titre illustratif de ceux-ci on peut notamment citer ceux à base de platine, palladium, ruthénium, rhodium et leurs mélanges comme les oxydes métalliques du groupe du platine tel que l'oxyde de rhodium $Rh_2O_3$ ou analogue. Conviennent également des oxydes simples ou mixtes tels que les oxydes de métaux de transition et plus particulièrement ceux à base de cérium et/ou de manganèse comme $CeO_2$, $Mn_2O_3$, $Mn_2O_3$-$CeO_2$, $Mn_2O_3$-$CeO_2$-$ZrO_2$ et les systèmes pérovskites.

Ces métaux peuvent être déposés sur des supports de type alumine, titane, silice, zéolithes sous une forme pure ou dopée.

A titre illustratif de ce type de catalyseur on peut plus particulièrement citer un catalyseur à base de platine déposé sur un oxyde de titane dopé au lanthane. Ce type de catalyseur est commercialisé par Rhodia (WO 97/49481).

La conversion du monoxyde d'azote en dioxyde d'azote par voie catalytique peut être effectuée selon deux modes de réalisation. Elle peut être effectuée soit préalablement à l'oxydation des particules carbonées par le dioxyde d'azote ainsi formé ou de manière concomitante à l'oxydation des particules carbonées.

Selon le premier mode de réalisation, on réalise la conversion du monoxyde d'azote en dioxyde d'azote préalablement à l'oxydation des particules carbonées. Elle est alors effectuée en amont du filtre contenant les particules carbonées à oxyder. Pour se faire, on met en contact le gaz d'échappement contenant le monoxyde d'azote avec un catalyseur de conversion CC, placé en amont du filtre contenant les particules carbonées à oxyder. Ce catalyseur de conversion, CC, du monoxyde d'azote en dioxyde d'azote est déposé sur un support placé en amont du filtre contenant les particules carbonées à oxyder et à travers duquel passe ledit gaz d'échappement avant d'entrer en contact avec le filtre comportant lesdites particules. Selon ce mode de réalisation, le support et le filtre sont agencés en série.

Dans un tel cas, il est souhaitable que la distance les séparant ne soit pas trop importante de manière à prévenir la manifestation de l'équilibre thermodynamique entre le monoxyde d'azote et le dioxyde d'azote qui tendrait à régénérer le monoxyde d'azote. Il est clair que cet ajustement relève des compétences de l'homme de l'art.

Dans un second mode de réalisation de l'invention, la conversion catalytique du monoxyde d'azote en dioxyde d'azote est réalisée directement au niveau du filtre sur lequel sont collectées les particules carbonées. Le catalyseur nécessaire à la conversion du monoxyde d'azote en dioxyde d'azote est donc dans ce cas particulier présent au niveau du filtre contenant les particules carbonées à oxyder.

Le catalyseur de conversion du monoxyde d'azote en dioxyde d'azote peut être mis en oeuvre sous la forme d'une couche appliquée à la surface d'un support. Ce mode d'application est plus particulièrement privilégié lorsque la conversion est effectuée préalablement à l'oxydation des particules carbonées.

On peut également envisager de mettre en oeuvre ce catalyseur de conversion sous une forme particulaire notamment sous forme de granulés, de billes et de cylindres. Cette seconde formulation est plus particulièrement appropriée lorsque la conversion de monoxyde d'azote en dioxyde d'azote et l'oxydation des particules carbonées par ce dioxyde d'azote sont réalisées de manière concomitante à la surface du filtre à particules carbonées à oxyder.

Un troisième mode de réalisation de l'invention, consiste à associer au catalyseur de conversion du monoxyde d'azote en dioxyde d'azote un système dit piège à NOx. Il s'agit d'un système catalytique capable d'oxyder le monoxyde d'azote en dioxyde d'azote puis d'adsorber le dioxyde d'azote ainsi formé. Le dioxyde d'azote ainsi stocké n'est rélargué que dans des conditions spécifiques. Ces conditions spécifiques sont en particulier liées à la température et/ou le rapport oxygène/hydrocarbures à l'échappement. (N.TAKAHASHI et al ; Catalysis Today ; N°27, 1996, 63-69). Ces pièges à NOx sont généralement à base de platine et de barium.

Selon un mode de réalisation particulier, ce système piège à NOx peut consister en une composition comprenant un support à base d'un oxyde de cérium, d'un oxyde de zirconium et d'un oxyde de scandium ou de terre rare autre que le cérium et une phase active à base de manganèse et d'au moins un autre élément choisi parmi les alcalins, les alcalinoterreux et les terres rares. Convient également une composition comprenant une phase supportée contenant du manganèse et au moins un autre élément choisi parmi le terbium, le gadolinium, l'europium, le samarium, le néodyme et le praséodyme et un support à base d'oxyde de cérium ou d'un mélange d'oxyde de cérium et d'oxyde de zirconium.

Ces systèmes se présentent généralement sous forme de poudres mais peuvent éventuellement être mis en forme pour se présenter sous forme de granulés, billes, cylindres ou nids d'abeille de dimensions variables. Ils peuvent aussi être utilisés dans des systèmes catalytiques comprenant un revêtement (wash coat) à propriétés catalytiques et à base de ces systèmes, sur un substrat du type par exemple monolithe métallique ou en céramique.

Un tel système piège à NOx peut être mis en oeuvre dans le cadre de la présente invention selon deux modes de réalisation.

Selon un premier mode, on peut envisager de le déposer sur le support comportant le catalyseur de conversion, CC, du monoxyde d'azote en dioxyde d'azote et qui est placé en amont du filtre contenant les particules carbonées à oxyder.

Selon un second mode de réalisation, ce système de piège à NOx est déposé conjointement avec le catalyseur de conversion, CC, sur le filtre contenant les particules carbonées à oxyder.

Selon un mode de réalisation particulier de l'invention, le dioxyde d'azote est généré par passage des gaz d'échappement à travers un support de préférence de monolithe et plus préférentiellement du type "nid d'abeilles en céramique", sur lequel est déposé au moins un catalyseur de conversion du monoxyde d'azote en dioxyde d'azote, de préférence un catalyseur à base de platine. Le dioxyde d'azote ainsi généré est ensuite transporté par les gaz d'échappement jusqu'au filtre comportant les particules carbonées à oxyder. Ledit filtre est placé en aval du support et à une distance suffisante pour que le dioxyde d'azote entrant en contact avec les particules soit en quantité suffisante pour assurer efficacement leur oxydation.

En ce qui concerne plus particulièrement le filtre à la surface duquel sont fixées les particules carbonées, il peut être de forme et structure conventionnelles. Classiquement, il comprend un ou plusieurs tamis en toile métallique à travers lesquels circulent les gaz d'échappement. Toutefois il peut également s'agir d'un filtre de type "paroi filtrante en céramique" ou "mousse en céramique" ou matériaux fibreux.

Le procédé selon l'invention permet avantageusement d'effectuer la combustion à une gamme de températures significativement élargie comparativement aux procédés classiques. Les résultats présentés dans les exemples ci-après rendent compte tout particulièrement de cette efficacité.

Les exemples et figures présentés ci-après sont soumis à titre illustratif et non limitatif de la présente invention.

**Figures :**

Figure 1

Analyse par infrarouge de la composition de gaz d'échappement témoin (avec un catalyseur de conversion de NO en $NO_2$ et une alumine imprégnée de 15% poids en cérium) en sortie de réacteur.

Figure 2

Analyse par infrarouge de la composition des gaz d'échappement témoin (avec catalyseur de conversion de NO en $NO_2$ et suies non ensemencées) en sortie de réacteur.

Figure 3

Analyse par infrarouge de la composition de gaz d'échappement ensemencés par un catalyseur COS et mis en présence d'un catalyseur CC, en amont du réacteur.

Figure 4

Analyse par infrarouge de la composition de suies ensemencées et issue d'un moteur et mis en présence d'un catalyseur CC en amont du réacteur.

**MATERIELS**

Dans les exemples 1 à 4 présentés ci-après, le catalyseur de conversion, CC, mis en oeuvre en entrée du réacteur est un catalyseur de conversion à base de platine déposé sur un oxyde de titane dopé au lanthane (WO 97/49481). Ce type de catalyseur est très efficace pour l'oxydation du NO en $NO_2$ dès 200°C.

Dans les exemples 1 et 3 l'alumine ou la suie mise en oeuvre en sortie du réacteur sont des produits industriels. Dans ces deux exemples l'alumine CONDEA® commercialisé par CONDEA CHEMIE ou la suie (réf. ELFLEX 125 de chez CABOT) ont été préalablement imprégnés par le sol organique EOLYS® contenant 25 % poids en Ce et commercialisé par Rhodia. Après imprégnation, le produit est ensuite séché à 100°C sous air puis à 250°C sous azote avant d'être mis en oeuvre dans l'essai de combustion. La teneur en oxyde de cérium a été maintenue constante à 15 % en poids de l'ensemble.

Dans l'exemple 4, la suie mise en oeuvre correspond à une suie collectée (sur banc moteur fonctionnant selon le cycle UDC (European Urban Driving Cycle) dans un filtre à particules. Pour cet essai le gasoil mis en oeuvre est additionné par 100 ppm de cérium issu du sol organique EOLYS®.

Les conditions du test d'oxydation du NO et des suies mis en oeuvre pour les exemples 1 à 4 sont identiques et décrites dans l'exemple 1.

L'analyse de la composition des gaz en sortie du réacteur est effectuée par analyse FTIR directement sans condensation des effluents pour éviter un piégeage de $HNO_2$ ou $HNO_3$ mais avec une dilution du flux de 30 l/h de mélange réactionnel par 90 l/h d'azote sec pour s'affranchir des interférences de $H_2O$ sur l'analyse Infra Rouge de NO et $NO_2$. L'analyseur FTIR utilisé est celui commercialisé par la Société NICOLET.

**EXEMPLE 1**

- Dans cet essai Témoin n° 1 l'ensemble est composé :

- en entrée de 50 mg de catalyseur $Pt/TiO_2$ dilué dans 150 mg de SiC,
- en sortie de 20 mg d'$Al_2O_3$ imprégné à 15 % $CeO_2$ dilué dans 150 mg de SiC.

Après stabilisation du système catalytique à 150°C pendant 1 h sous flux du mélange réactionnel NO = 900 ppm, $O_2$ = 10 %, $H_2O$ = 10 %, complémenté à 100 % par $N_2$, la température du réacteur est portée de 150 à 400°C à 10°C/mn puis stabilisée à 400°C.

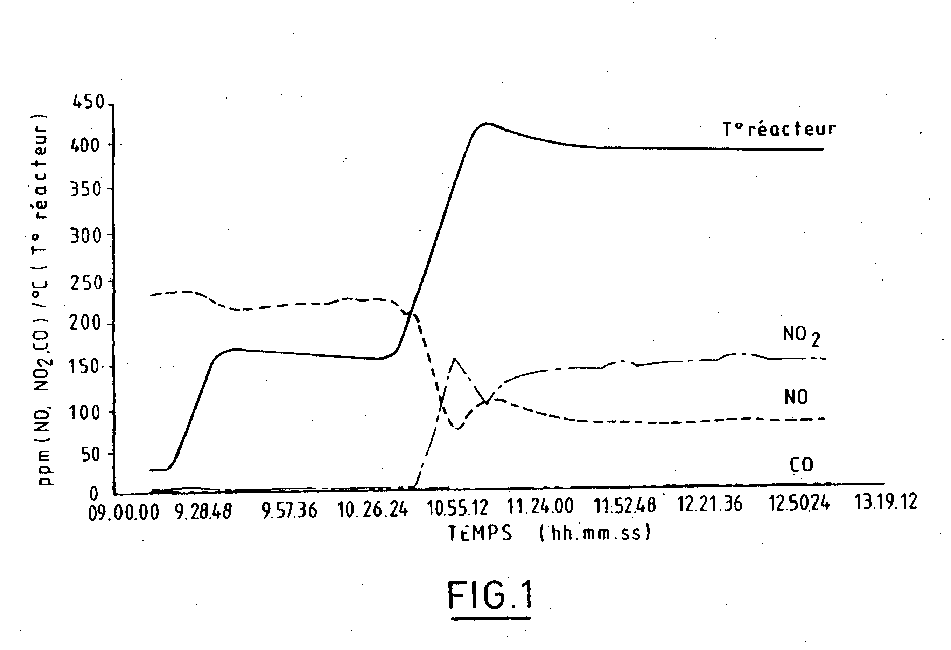

Les résultats reportés sur la figure 1 montrent que :

Dès 220°C le catalyseur Pt/TiO$_2$ est actif pour l'oxydation de NO en NO$_2$. Le maximum d'oxydation de NO en NO$_2$ est de l'ordre de 75 % à 350°C puis se stabilise à 400°C et conduit à un ratio NO$_2$ = 65 %/NO = 35 %.

On ne note pas de formation de CO, ce qui confirme que l'alumine imprégnée de 15 % CeO$_2$ est inerte vis à vis des réactions mises en oeuvre.

En conséquence, cet essai de référence montre qu'en absence de suie, le catalyseur à base de platine oxyde dès 220°C le NO en NO$_2$.

## EXEMPLE 2

On procède comme à l'exemple 1 en associant dans cet essai Témoin n° 2 :

- en entrée du réacteur : 50 mg de catalyseur Pt/TiO$_2$ dilué dans 150 mg de SiC,
- en sortie du réacteur : 20 mg de suie CABOT dilué dans 150 mg de SiC.

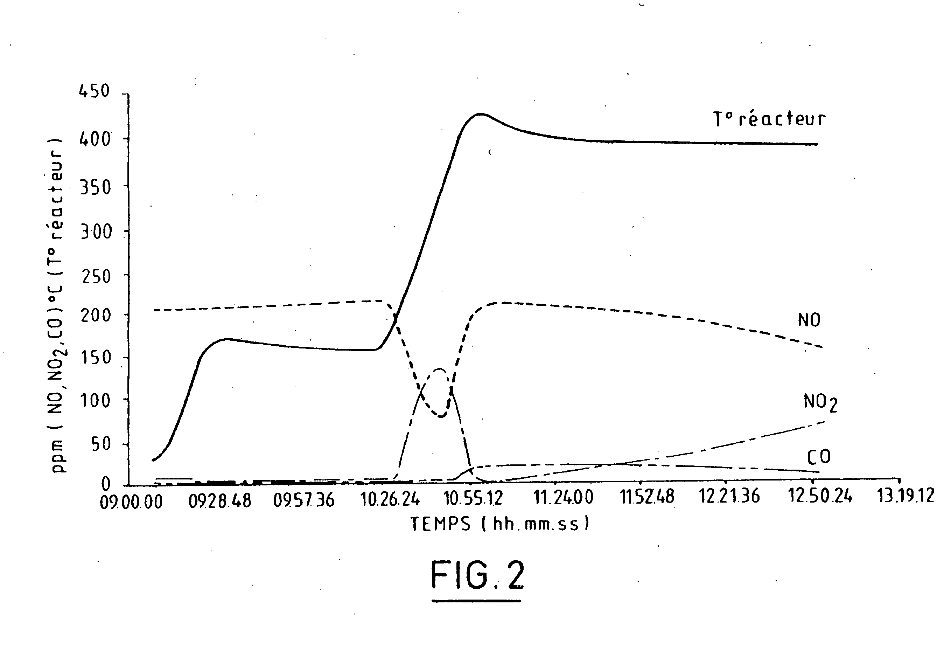

Les résultats reportés sur le graphe de la figure 2 montrent que :

Dès 200°C le catalyseur Pt/TiO$_2$ oxyde le NO en NO$_2$ comme dans l'essai témoin de l'exemple 1. Le maximum d'oxydation est observé pour une température de 350°C puis la concentration en NO$_2$ diminue très rapidement entre 350 et 400°C. A la température du palier à 400°C on ne détecte pas de NO$_2$ ; la totalité des oxydes d'azote est détectée sous forme de NO.

**[0073]** A partir de 380°C, la teneur en CO devient significative ce qui indique un début de combustion lente de la suie CABOT par le NO$_2$.

Ce second essai témoin montre que dans les conditions de l'application diesel le catalyseur à base de platine oxyde dès 200°C le NO en NO$_2$ puis à partir de 350°C le NO$_2$ formé sur le catalyseur est réduit par le carbone de la suie CABOT selon les réactions chimiques

$$C + 2NO_2 \rightarrow CO_2 + 2NO$$

$$C + NO_2 \rightarrow CO + NO$$

ce qui conduit à l'équilibre à 400°C à un niveau de NO identique à celui d'origine et à une concentration en NO$_2$ nulle au début du palier puis qui augmente sensiblement au cours du temps.

## EXEMPLE 3

- On procède comme à l'exemple 1 en associant dans l'essai n°3 :

en entrée du réacteur 50 mg du catalyseur Pt/TiO$_2$ dilué dans 150 mg de SiC,

- en sortie du réacteur 20 mg d'une suie CABOT ensemencée à 15 % poids de CeO$_2$ par de l'additif EOLYS® dilué dans 150 mg de SiC.

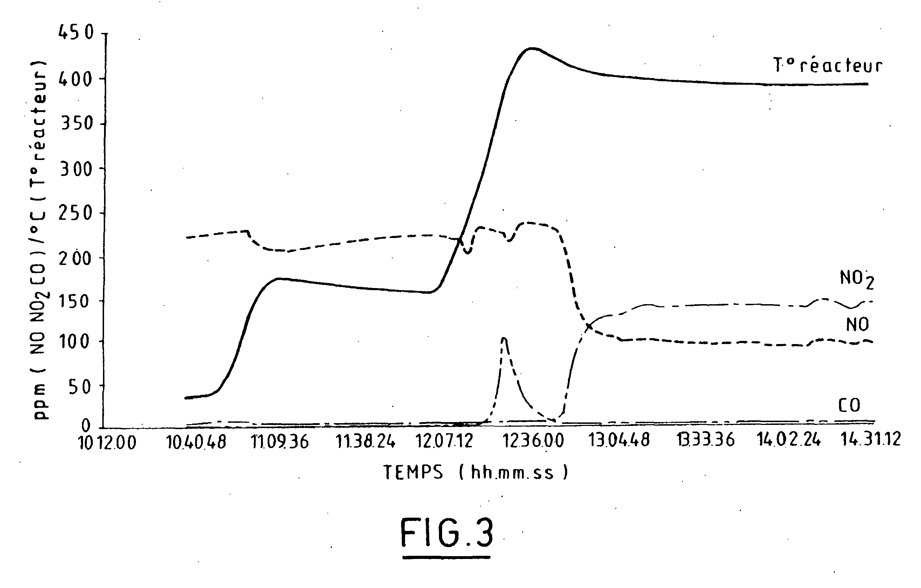

Les résultats reportés sur la figure 3 montrent que :

- à partir de 220°C la conversion de NO en NO$_2$ débute, vers 240°C on détecte une teneur en NO$_2$ de l'ordre de 10 ppm.
- à partir de 240°C on ne détecte plus de NO$_2$ ce qui se traduit par un signal de NO identique à celui observé au palier à 150°C ;
- à partir de 300°C une formation significative de CO est observée, la quantité de CO produite est de l'ordre de 100 ppm à 380°C ;
- à la température de 400°C l'analyse du gaz sortie réacteur fait apparaître une teneur en CO nulle et une forte oxydation de NO en NO$_2$.

Cet essai de l'invention montre que l'association d'un catalyseur de conversion et d'une suie ensemencée par de l'oxyde de cérium entraîne la combustion de la suie dès 240°C. Les réactions mises en oeuvre sont les suivantes :

- à partir de 240°C

$$2NO_2 + C \rightarrow 2NO + CO_2$$

- à partir de 300°C

$$NO_2 + C \rightarrow NO + CO$$

Ce qui se traduit par une absence de production de NO$_2$ entre 240 et 400°C.

## EXEMPLE 4

On procède comme à l'exemple 3 en associant cette fois dans l'essai n° 4, 50 mg de catalyseur de conversion Pt/TiO$_2$ et 20 mg de suie issue d'un moteur en substitution de la suie CABOT décrite dans l'exemple 3.

L'analyse de la composition chimique de cette suie collectée dans un filtre à particules monté sur un véhicule diesel fonctionnant avec un gasoil additivé par 100 ppm de l'additif EOLYS commercialisé par Rhodia, montre que la teneur en CeO$_2$ est de 13,4 % poids par rapport à la suie brute.

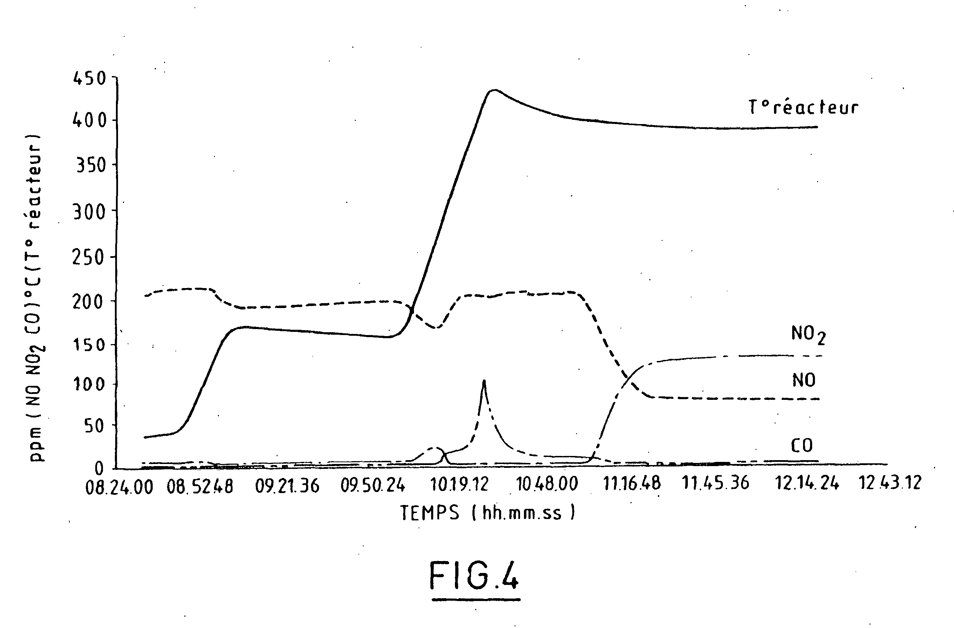

Les résultats reportés sur la figure 4 confirment les résultats de l'essai n° 4 caractéristique d'un début d'oxydation de NO en NO$_2$ dès 220°C. Dès lors que la totalité de la suie mise en oeuvre dans l'essai est oxydée

par le $NO_2$ produit par le catalyseur amont, la composition de sortie correspond à un ratio $NO/NO_2$ caractéristique de l'activité du catalyseur $Pt/TiO_2$.

Les résultats obtenus montrent sans ambiguïté que :

- La température d'inflammation des suies est abaissée de façon significative lorsque les particules de carbone contiennent de l'oxyde de cérium issu d'un additif tel que le produit EOLYS® En absence de cet additif, la réaction d'oxydation du carbone par le $NO_2$ produit sur le catalyseur à base de platine placé en amont, se produit à partir de 350°C contre 220°C lorsque la suie contient de l'oxyde de cérium.

- La concentration en $NO_2$ en sortie du réacteur contenant l'association en entrée d'un catalyseur d'oxydation et en sortie d'une suie additivée, est très fortement diminuée jusqu'à 400°C. En l'absence d'oxyde de cérium dispersé dans et/ou sur de la suie et/ou en l'absence de suie en aval du catalyseur d'oxydation à base de platine, on détecte majoritairement dans le flux réactionnel du $NO_2$. Dans les conditions d'utilisation sur véhicule ceci se traduirait par un rejet dans l'atmosphère d'acide nitrique.

## Revendications

1. Procédé de traitement par combustion des particules carbonées collectées sur un filtre placé dans un circuit d'échappement d'un moteur à combustion interne dans lequel la combustion desdites particules est effectuée par leur mise en contact avec un mélange gazeux comprenant au moins du dioxyde d'azote généré au sein du circuit d'échappement dudit moteur, **caractérisé en ce que** lesdites particules ont été ensemencées préalablement à leur combustion par au moins un catalyseur d'oxydation de celles-ci choisi parmi le cérium et le fer, ce ou ces éléments étant présents dans ledit catalyseur sous la forme de leur oxyde.

2. Procédé selon la revendication 1 **caractérisé en ce que** le catalyseur d'oxydation ensemencé au niveau des particules carbonées y est incorporé via l'introduction d'un sol dans le carburant.

3. Procédé selon la revendication 1 **caractérisé en ce que** le catalyseur d'oxydation est ensemencé au niveau des particules carbonées via son introduction soit dans l'air à l'admission du moteur, soit dans le circuit de recirculation des gaz d'échappement (RGE) soit à l'échappement lui même en amont du filtre à particules.

4. Procédé selon l'une des revendications 1 à 3 **caractérisé en ce que** la teneur en catalyseur d'oxydation ensemencé au niveau des particules carbonées est comprise entre 0,1 % et 30 % de préférence entre 0,1 % et 15 % exprimée en poids de l'élément catalytique par rapport au poids de la particule carbonée.

5. Procédé selon la revendication 4 **caractérisé en ce que** la teneur en catalyseur d'oxydation est au moins de 0,5 % et de préférence au moins de 2 % exprimée en poids de l'élément catalytique par rapport au poids de la particule carbonée.

6. Procédé selon l'une des revendications précédentes **caractérisé en ce que** la concentration en dioxyde d'azote nécessaire à la combustion desdites particules carbonées est ajustée par un changement du réglage du moteur opéré de façon continue ou discontinue de manière à forcer le brûlage des particules carbonées collectées sur le filtre.

7. Procédé selon l'une des revendications 1 à 5 **caractérisé en ce que** la concentration en dioxyde d'azote nécessaire à la combustion desdites particules carbonées est générée par voie catalytique.

8. Procédé selon l'une des revendications 1 à 5 et 7 **caractérisé en ce que** l'on génère le dioxyde d'azote par conversion catalytique du monoxyde d'azote.

9. Procédé selon la revendication 8 **caractérisé en ce que** la conversion du monoxyde d'azote en dioxyde d'azote est effectuée dans une étape préliminaire à l'oxydation des particules carbonées.

10. Procédé selon la revendication 9 **caractérisé en ce que** la conversion du monoxyde d'azote en dioxyde d'azote est effectuée en amont du filtre contenant les particules carbonées à oxyder.

11. Procédé selon la revendication 9 ou 10 **caractérisé en ce que** la conversion du monoxyde d'azote en dioxyde d'azote est effectuée par mise en contact du gaz d'échappement avec un catalyseur de conversion, CC, du monoxyde d'azote en dioxyde d'azote présent sur un support qui est placé en amont du filtre contenant les particules carbonées à oxyder et au travers duquel passe ledit gaz d'échappement.

12. Procédé selon l'une des revendications 1 à 5 et 7 ou 8 **caractérisé en ce que** la conversion du monoxyde d'azote en dioxyde d'azote est effectuée de manière concomitante à l'oxydation des particules carbonées par le dioxyde d'azote ainsi formé.

13. Procédé selon la revendication 12 **caractérisé en ce que** la conversion catalytique du monoxyde d'azote en dioxyde d'azote est réalisée au niveau du filtre sur lequel sont collectées les particules carbonées à oxyder.

14. Procédé selon la revendication 13 **caractérisé en ce que** le catalyseur permettant la conversion du monoxyde d'azote en dioxyde d'azote est présent au niveau du filtre contenant les particules carbonées à oxyder.

15. Procédé selon l'une des revendications 5 et 7 à 14 **caractérisé en ce que** le catalyseur de conversion du monoxyde d'azote en dioxyde d'azote est choisi parmi ceux à base de platine, palladium, ruthénium, rhodium et leurs mélanges comme les oxydes métalliques du groupe du platine tel que l'oxyde de rhodium $Rh_2O_3$ ou analogue ainsi que les oxydes simples ou mixtes tels que les oxydes de métaux de transition comme ceux à base de cérium et/ou de manganèse tels $CeO_2$, $Mn_2O_3$, $Mn_2O_3$-$CeO_2$, $Mn_2O_3$-$CeO_2$-$ZrO_2$ et les systèmes perovskites.

16. Procédé selon la revendication 15 **caractérisé en ce que** le catalyseur est déposé sur un support du type alumine, titane, silice, zéolithe sous une forme pure ou dopée.

17. Procédé selon la revendication 16 **caractérisé en ce que** le catalyseur de conversion du monoxyde d'azote en dioxyde d'azote est à base de platine déposé sur de l'oxyde de titane dopé au lanthane.

18. Procédé selon l'une des revendications 7 à 17 **caractérisé en ce qu'**on associe au catalyseur de conversion du monoxyde d'azote en dioxyde d'azote un système dit piège à NOx.

19. Procédé selon la revendication 18 **caractérisé en ce que** le système est une composition comprenant un support à base d'un oxyde de cérium, d'un oxyde de zirconium et d'un oxyde de scandium ou de terre rare autre que le cérium et une phase active à base de manganèse et d'au moins un autre élément choisi parmi les alcalins, les alcalinoterreux et les terres rares ou une composition comprenant une phase supportée contenant du manganèse et au moins un autre élément choisi parmi le terbium, le gadolinium, l'europium, le samarium, le néodyme et le praséodyme et un support à base d'oxyde de cérium ou d'un mélange d'oxyde de cérium et d'oxyde de zirconium.

20. Procédé selon l'une des revendications 1 à 5 et 7 à 17 **caractérisé en ce qu'**on génère le dioxyde d'azote par passage des gaz d'échappement à travers un support sur lequel est déposé au moins un catalyseur de conversion du monoxyde d'azote en dioxyde d'azote de manière à générer le dioxyde d'azote qui est ensuite transporté par les gaz d'échappement jusqu'à un filtre métallique contenant les particules carbonées à oxyder, localisé en aval du support et à une distance suffisante pour que le dioxyde d'azote entrant en contact avec lesdites particules carbonées soit en quantité suffisante pour assurer efficacement leur oxydation.

## Claims

1. Process for the combustion treatment of carbonaceous particles collected on a filter situated in an exhaust circuit of an internal combustion engine, in which the combustion of the said particles is brought about by contacting them with a gas mixture comprising at least nitrogen dioxide generated within the exhaust circuit of the said engine, **characterized in that** the said particles have been seeded prior to their combustion with at least one catalyst of their oxidation selected from cerium and iron, this element or these elements being present in the said catalyst in the form of their oxide.

2. Process according to Claim 1, **characterized in that** the oxidation catalyst seeded at the level of the carbonaceous particles is incorporated therein via the introduction of a sol into the fuel.

3. Process according to Claim 1, **characterized in that** the oxidation catalyst is seeded at the level of the carbonaceous particles via its introduction alternatively into the air at the intake of the engine, or into the exhaust gas recirculation (EGR) circuit, or at the exhaust itself upstream of the particle filter.

4. Process according to one of Claims 1 to 3, **characterized in that** the amount of oxidation catalyst seeded at the level of the carbonaceous particles is between 0.1% and 30%, preferably between 0.1% and 15%, expressed by weight of the catalytic element relative to the weight of the carbonaceous particle.

5. Process according to Claim 4, **characterized in that** the amount of oxidation catalyst is at least 0.5% and, preferably, at least 2% expressed by weight of the catalytic element relative to the weight of the carbonaceous particle.

6. Process according to one of the preceding claims, **characterized in that** the concentration of nitrogen dioxide required for the combustion of the said carbonaceous particles is adjusted by a change in the control of the engine, performed continuously or discontinuously so as to induce the burning of the carbonaceous particles collected on the filter.

7. Process according to one of Claims 1 to 5, **charac-**

terized in that** the concentration of nitrogen dioxide required for the combustion of the said carbonaceous particles is generated catalytically.

8. Process according to one of Claims 1 to 5 and 7, **characterized in that** the nitrogen dioxide is generated by catalytic conversion of nitrogen monoxide.

9. Process according to Claim 8, **characterized in that** the conversion of the nitrogen monoxide to nitrogen dioxide is performed in a step prior to the oxidation of the carbonaceous particles.

10. Process according to Claim 9, **characterized in that** the conversion of the nitrogen monoxide to nitrogen dioxide is performed upstream of the filter containing the carbonaceous particles to be oxidized.

11. Process according to Claim 9 or 10, **characterized in that** the conversion of the nitrogen monoxide to nitrogen dioxide is performed by contacting the exhaust gas with a conversion catalyst, CC, for converting the nitrogen monoxide to nitrogen dioxide, which is present on a support which is situated upstream of the filter containing the carbonaceous particles to be oxidized and through which the said exhaust gas passes.

12. Process according to one of Claims 1 to 5 and 7 or 8, **characterized in that** the conversion of the nitrogen monoxide to nitrogen dioxide is performed concomitantly with the oxidation of the carbonaceous particles by the nitrogen dioxide thus formed.

13. Process according to Claim 12, **characterized in that** the catalytic conversion of the nitrogen monoxide to nitrogen dioxide is carried out at the level of the filter on which the carbonaceous particles to be oxidized are collected.

14. Process according to Claim 13, **characterized in that** the catalyst permitting the conversion of the nitrogen monoxide to nitrogen dioxide is present at the level of the filter containing the carbonaceous particles to be oxidized.

15. Process according to one of Claims 5 and 7 to 14, **characterized in that** the catalyst for converting the nitrogen monoxide to nitrogen dioxide is selected from those based on platinum, palladium, ruthenium, rhodium and their mixtures such as metal oxides of the platinum group, for instance rhodium oxide, $Rh_2O_3$ or the like as well as simple oxides or mixed oxides such as transition metal oxides such as those based on cerium and/or manganese, such as $CeO_2$, $Mn_2O_3$, $Mn_2O_3$-$CeO_2$, $Mn_2O_3$-$CeO_2$-$ZrO_2$

and the perovskite systems.

16. Process according to Claim 15, **characterized in that** the catalyst is deposited on a support of the alumina, titanium, silica or zeolite type in a pure or doped form.

17. Process according to Claim 16, **characterized in that** the catalyst for converting the nitrogen monoxide to nitrogen dioxide is based on platinum deposited on a lanthanum-doped titanium oxide.

18. Process according to one of Claims 7 to 17, **characterized in that** the catalyst for converting the nitrogen monoxide to nitrogen dioxide is combined with a so-called $NO_x$ trap system.

19. Process according to Claim 18, **characterized in that** the system is a composition comprising a support based on an oxide of cerium, an oxide of zirconium and an oxide of scandium or of a rare earth other than cerium and an active phase based on manganese and on at least one other element, selected from alkali metals, alkaline earth metals and rare earth metals or a composition comprising a supported phase containing manganese and at least one other element selected from terbium, gadolinium, europium, samarium, neodymium and praseodymium and a support based on cerium oxide or a mixture of cerium oxide and zirconium oxide.

20. Process according to one of Claims 1 to 5 and 7 to 17, **characterized in that** the nitrogen dioxide is generated by passing the exhaust gases through a support on which is deposited at least one catalyst for converting the nitrogen monoxide to nitrogen dioxide so as to generate nitrogen dioxide which is subsequently transported by the exhaust gases to a metal filter comprising the carbonaceous particles to be oxidized, which filter is located downstream of the support and at a distance sufficient for the nitrogen dioxide coming into contact with the said carbonaceous particles to be present in an amount sufficient to ensure their effective oxidation.

**Patentansprüche**

1. Ein Verfahren zur Behandlung von kohlenstoffhaltigen Partikeln durch Verbrennung, wobei die kohlenstoffhaltigen Partikel auf einem Filter, der in einer Auspuffanlage eines Verbrennungsmotors angeordnet ist, gesammelt werden, in welchem die Verbrennung dieser Partikel durchgeführt wird, indem sie mit einer gasförmigen Mischung, die wenigstens Stickstoffdioxid umfasst, das innerhalb der Auspuffanlage des Motors erzeugt worden ist, in Kontakt gebracht werden, **dadurch gekennzeichnet, dass** diese Partikel vor ihrer Verbrennung mit wenigstens einem Oxidationskatalysator, der aus Cer und Eisen ausgewählt ist, wobei dessen Element(e) in dem Katalysator in Form ihres Oxids vorliegen, besät worden sind.

2. Das Verfahren gemäß Anspruch 1, **dadurch gekennzeichnet, dass** der Oxidationskatalysator, der auf dem Niveau der kohlenstoffhaltigen Partikel gesät wird, durch Einführung eines Sols im Kraftstoff darin eingearbeitet wird.

3. Das Verfahren gemäß Anspruch 1, **dadurch gekennzeichnet, dass** der Oxidationskatalysator auf dem Niveau der kohlenstoffhaltigen Partikel durch dessen Einführung entweder in die Einlassluft des Motors, den Rezirkulationskreislauf der Abgase (recirculation des gaz d'echappement, RGE) oder in den Auspuff selbst oberhalb des Partikelfilters gesät wird.

4. Das Verfahren gemäß einem der Ansprüche 1 bis 3, **dadurch gekennzeichnet, dass** der Gehalt an Oxidationskatalysator, der auf dem Niveau der kohlenstoffhaltigen Partikel gesät wird, zwischen 0,1 % bis 30 %, bevorzugt zwischen 0,1 % und 15 % liegt, ausgedrückt als Gewicht des katalytischen Elements bezogen auf das Gewicht des kohlenstoffhaltigen Partikels.

5. Das Verfahren gemäß Anspruch 4, **dadurch gekennzeichnet, dass** der Gehalt an Oxidationskatalysator wenigstens 0,5 % und bevorzugt wenigstens 2 % beträgt, ausgedrückt als Gewicht des katalytischen Elements bezogen auf das Gewicht des kohlenstoffhaltigen Partikels.

6. Das Verfahren gemäß einem der vorhergehenden Ansprüche, **dadurch gekennzeichnet, dass** die Stickstoffdioxidkonzentration, die für die Verbrennung der kohlenstoffhaltigen Partikel erforderlich ist, durch eine Veränderung der Einstellung des Motors eingestellt wird, der kontinuierlich oder diskontinuierlich betrieben wird, um das Verbrennen der auf dem Filter gesammelten kohlenstoffhaltigen Partikel zu forcieren.

7. Das Verfahren gemäß einem der Ansprüche 1 bis 5, **dadurch gekennzeichnet, dass** die Stickstoffdioxidkonzentration, die für die Verbrennung der kohlenstoffhaltigen Partikel erforderlich ist, auf katalytischem Weg erzeugt wird.

8. Das Verfahren gemäß einem der Ansprüche 1 bis 5 und 7, **dadurch gekennzeichnet, dass** das Stickstoffdioxid durch katalytische Umwandlung von Stickstoffmonoxid erzeugt wird.

9. Das Verfahren gemäß Anspruch 8, **dadurch gekennzeichnet, dass** die Umwandlung von Stickstoffmonoxid in Stickstoffdioxid in einer Stufe vor der Oxidation der kohlenstoffhaltigen Partikel vorgenommen wird.

10. Das Verfahren gemäß Anspruch 9, **dadurch gekennzeichnet, dass** die Umwandlung von Stickstoffmonoxid in Stickstoffdioxid vor dem Filter durchgeführt wird, der die zu oxidierenden kohlenstoffhaltigen Partikel enthält.

11. Das Verfahren gemäß Anspruch 9 oder 10, **dadurch gekennzeichnet, dass** die Umwandlung von Stickstoffmonoxid in Stickstoffdioxid durchgeführt wird, indem das Abgas mit einem Umwandlungskatalysator, CC, von Stickstoffmonoxid in Stickstoffdioxid, der auf einem Träger vorliegt, welcher vor dem Filter, der die zu oxidierenden kohlenstoffhaltigen Partikel enthält, angeordnet ist und durch den das Abgas durchströmt, in Kontakt gebracht wird.

12. Das Verfahren gemäß einem der Ansprüche 1 bis 5 und 7 oder 8, **dadurch gekennzeichnet, dass** die Umwandlung von Stickstoffmonoxid in Stickstoffdioxid begleitend zur Oxidation der kohlenstoffhaltigen Partikel durch das so gebildete Stickstoffdioxid ausgeführt wird.

13. Das Verfahren gemäß Anspruch 12, **dadurch gekennzeichnet, dass** die katalytische Umwandlung von Stickstoffmonoxid in Stickstoffdioxid auf dem Niveau des Filters, auf dem die zu oxidierenden kohlenstoffhaltigen Partikel gesammelt sind, durchgeführt wird.

14. Das Verfahren gemäß Anspruch 13, **dadurch gekennzeichnet, dass** der Katalysator, der die Umwandlung von Stickstoffmonoxid in Stickstoffdioxid ermöglicht, auf dem Niveau des Filters, der die zu oxidierenden kohlenstoffhaltigen Partikel enthält, vorliegt.

15. Das Verfahren gemäß einem der Ansprüche 5 und 7 bis 14, **dadurch gekennzeichnet, dass** der Katalysator zur Umwandlung von Stickstoffmonoxid in Stickstoffdioxid ausgewählt wird aus jenen auf der Grundlage von Platin, Palladium, Ruthenium, Rhodium und deren Mischungen wie Metalloxide der Platingruppe wie das Rhodiumoxid $Rh_2O_3$ oder ähnliches wie auch aus den einfachen oder gemischten Oxiden wie Übergangsmetalloxide wie jene auf der Grundlage von Cer und/oder Magnesium wie $CeO_2$, $Mn_2O_3$, $Mn_2O_3$-$CeO_2$, $Mn_2O_3$-$CeO_2$-$ZrO_2$ und den Perovskitsystemen.

16. Das Verfahren gemäß Anspruch 15, **dadurch ge-**

**kennzeichnet, dass** der Katalysator auf einem Träger vom Typ Aluminiumoxid, Titan, Silica, Zeolith in reiner oder dotierter Form aufgetragen ist.

17. Das Verfahren gemäß Anspruch 16, **dadurch gekennzeichnet, dass** der Katalysator zur Umwandlung von Stickstoffmonoxid in Stickstoffdioxid auf Platinbasis ist, aufgetragen auf mit Lanthan dotiertem Titanoxid.

18. Das Verfahren gemäß einem der Ansprüche 7 bis 17, **dadurch gekennzeichnet, dass** man mit dem Katalysator zur Umwandlung von Stickstoffmonoxid in Stickstoffdioxid ein System, eine sogenannte NOx-Falle, assoziiert.

19. Das Verfahren gemäß Anspruch 18, **dadurch gekennzeichnet, dass** das System eine Zusammensetzung darstellt, die einen Träger auf der Grundlage eines Ceroxids, eines Zirkoniumoxids und eines Oxids von Scandium oder einer von Cer verschiedenen seltenen Erde und eine aktive Phase auf der Grundlage von Mangan und wenigstens einem weiteren Element, ausgewählt aus Alkalielementen, Erdalkalielementen und seltenen Erden, umfasst, oder eine Zusammensetzung darstellt, die eine geträgerte Phase, die Mangan und wenigstens ein weiteres Element enthält, das aus Terbium, Gadolinium, Europium, Samarium, Neodym und Praseodym ausgewählt ist, und einen Träger auf der Grundlage von Ceroxid, oder einer Mischung von Ceroxid und Zirkoniumoxid umfasst.

20. Das Verfahren gemäß einem der Ansprüche 1 bis 5 und 7 bis 17, **dadurch gekennzeichnet, dass** das Stickstoffdioxid durch Leiten der Abgase durch einen Träger erzeugt wird, auf dem wenigstens ein Katalysator zur Umwandlung von Stickstoffmonoxid in Stickstoffdioxid aufgetragen ist, um das Stickstoffdioxid zu erzeugen, das anschließend von den Abgasen bis zu einem metallischen Filter transportiert wird, der die zu oxidierenden kohlenstoffhaltigen Partikel enthält, der nach dem Träger und in einer Entfernung angeordnet ist, die ausreicht, damit das Stickstoffdioxid, das mit den kohlenstoffhaltigen Partikeln in Kontakt tritt, in einer ausreichenden Menge vorliegt, um deren effiziente Oxidation zu gewährleisten.

FIG.1

EP 1 090 211 B1

FIG. 2

FIG.3

FIG.4

EP 1 090 211 B1